# EUROPEAN PATENT SPECIFICATION

(11) **EP 0 656 330 B1**
(45) Date of publication and mention of the grant of the patent: **10.06.1998**
(21) Application number: 94118327.9
(22) Date of filing: 22.11.1994
(51) Int. Cl.: C04B 35/443, C04B 35/65

(54) **Low iron spinel by aluminothermic fusion**
Spinel mit geringem Eisengehalt aus aluminothermischen Schmelzverfahren
Spinelle à faible teneur en fer préparé par fusion aluminothermique

(30) Priority: 03.12.1993 US 161658
(43) Date of publication of application: 07.06.1995
(73) Proprietor: WASHINGTON MILLS ELECTRO MINERALS CORPORATION, Niagara Falls Ontario L2E 6V9 (CA)
(72) Inventor: Veres, Darrell F., Fort Erie, Ontario (US); Wellborn, William W., Shrewsbury, Massachusetts 01545 (US)
(74) Representative: Weber, Dieter, Dr.

(56) References cited:
- EP-A- 0 433 450
- US-A- 3 219 466
- PATENT ABSTRACTS OF JAPAN vol. 16, no. 228 (C-0944) 27 May 1992 & JP-A-04 046 059 (SHINAGAWA REFRACTORIES CO. LTD.) 17 February 1992
- DATABASE WPI Week 9213, Derwent Publications Ltd., London, GB; AN 92-103025 Y. KOSTYRA ET AL. & SU-A-1 643 507 (DNEPR METAL INST.) 23 April 1991
- DATABASE WPI Week 9307, Derwent Publications Ltd., London, GB; AN 93-056814 E DEMIN ET AL. & SU-A-1 719 358 (E REFREVATORIES IND. RES.) 15 March 1992
- DATABASE WPI Week 9304, Derwent Publications Ltd., London, GB; AN 93-34161 G. I. ANTONOV & SU-A-1 715 769 (UKR REFRACTORIES RES. INST.) 29 February 1992
- DATABASE WPI Week 8430, Derwent Publications Ltd., London, GB; AN 84-184754 & JP-B-3 002 811 (TOSHIBA MONOFRAX KK) 17 January 1991

## Description

This invention relates to the preparation of spinels by co-fusion of bauxite and magnesite.

Spinels as used herein means magnesium aluminum oxide (MgAl₂O₄) which is usually written as a mixed oxide MgO·Al₂O₃. Such spinels as above written may be in the presence of either excess alumina (Al₂O₃) or excess magnesia (MgO) or minor impurities, i.e. impurities which do not significantly affect the properties of the spinel and are usually, but not necessarily in an amount of less than five percent.

Spinels are known refractories, i.e. they are stable at high temperatures, melting at about 2135 degrees Celsius (3,875 degrees Fahrenheit). Spinels therefore find utility as a structural material for high temperature furnaces, especially those used for smelting and melting metals. Spinels have, for example, found utility as a structural material for melting iron and iron containing metals such as various steels.

Unfortunately, unless the spinels are almost free of iron oxides, i.e. less than one percent by weight, spinels may be subject to serious corrosion by the molten metals contained in the furnace. Up to the present time, it has been difficult and costly to eliminate iron impurities from spinel.

Attempts to use carbon in fusions employing bauxite and magnesite to reduce the iron content are not commercially feasible because the carbon causes magnesium oxide to fume and evaporate from the system.

It has, for example, been known that low iron spinel can be prepared by fusing essentially pure alumina, e.g. pure white aluminum ore (99.5% alumina), with magnesite (97.5% MgO). To obtain pure spinels the US-A-1 448 010 uses pure aluminum oxide. The resulting spinel product will usually contain less than one percent iron oxide but is prohibitively costly for almost all commercial applications due to a limited supply of pure white aluminum ore. In addition employing pure white aluminum ore for such a purpose would rapidly deplete supplies of the ore which has other uses. Using synthetically produced or purified alumina adds synthesis or purification steps which as a practical matter increase the cost to such an extent that the resulting spinel simply cannot be used in commodity applications.

Additionally, the thermal shock resistance, the hardness, and the physical shock resistance of spinels made from pure alumina desirably could be improved.

Another disadvantage associated with known spinels is that significant amounts of energy are required to form them, usually electrical energy applied to an arc furnace. Reduction of those energy requirements would be desirable from both cost and conservation viewpoints.

According to JP-A-4 046 059 MgO and Al₂O₃ are kneaded with 1,6 to 10 wt.% Fe₂O₃ and/or 0.5 to 3 wt.% TiO₂, and the product is molded, dried and fired at ≥ 1700°C.

In accordance with the present invention there is therefore provided a spinel comprising from 20 to 40 and preferably 27 to 33 weight percent magnesium expressed as MgO, from 55 to 77 and preferably 63 to 69 weight percent aluminum expressed as Al₂O₃ from 2 to 4 weight percent titanium expressed as TiO₂, less than 1 weight percent silicon expressed as SiO₂, less than 0.5 weight percent iron expressed as Fe₂O₃, and less than 0.5 weight percent calcium expressed as CaO.

The invention further comprises a method for the preparation of an aluminum-magnesium spinel containing less than 0.5 weight percent iron expressed as Fe₂O₃ which comprises fusing bauxite and magnesite together in the presence of metallic aluminum and separating the spinel from freed impurities. Preferably from 19 to 39 weight percent magnesite and from 56 to 76 weight percent bauxite and from about 1.5 to about 5 weight percent aluminum are used in the fusion and more preferably from 63 to 69 weight percent bauxite and from 27 to 33 weight percent magnesite and from about 2 to 4 weight percent metallic aluminum are used in the fusion.

The spinel of the present invention overcomes many of the disadvantages associated with spinels of the prior art which were previously discussed and the method of the present invention permits manufacture of a low iron spinel from bauxite in a method using less electrical energy than previously required. The advantages of the method result from the addition of aluminum to the fusion which lowers the electrical energy requirement due to the heat of oxidation of aluminum added to the fusion and which simultaneously reduces iron oxide present in the bauxite permitting the removal of the vast majority of iron from the resulting spinel thus increasing its corrosion resistance. At the same time the method permits the retention of from 2 to 4 percent titanium (expressed as titanium dioxide) in the spinel which may offer advantages to the spinel with respect to physical properties.

As presented herein, percentages of materials present in the spinels of the invention are frequently stated as the oxide of an element. In such a case the percentage is actually the percent oxide since the spinel is in a state of oxidation and there is little, if any, unoxidized material in the spinel. It is to be understood, however, that the statement of material present as the oxide does not necessarily mean that the particular oxide is actually present since the spinel must be considered as a whole wherein complex oxides of more than one element may be present.

In practicing the method of the present invention bauxite, magnesite and aluminum are introduced into a furnace, preferably an arc furnace, to fuse the material which was introduced. After initial fusion additional bauxite, magnesite and aluminum is introduced and fused until the furnace is full. The fused material is then cooled to form two phases, a spinel phase on the top and a small amount of ferrosilicon at the bottom consisting of reduced oxides. The ferrosilicon constitutes about 5 percent of the finished fusion.

The invention may be further illustrated but not limited by the following examples:

### Example 1

Spinels were made using the following procedure. Materials as listed in Table 1 below were introduced into an arc furnace having dimensions of 14 cm (five and one-half inches) wide and 20 cm (eight inches) long. The furnace capacity is about 5,4 kg (twelve pounds) of material. The electrodes of the furnace were of AGX grade graphite and were initially 38 mm (one and one-half inches) in diameter and 61 cm (twenty four inches) long. The furnace was operated at eighty volts at two hundred fifty amperes. The furnace pot was lined with 13 mm (one-half inch) graphite on all sides with a 25,4 mm (one inch) graphite lined bottom. The furnace pot was continuously cooled on all four sides and the bottom using a water stream. The raw material was continuously fused in the furnace and raw material added until the furnace pot was essentially full. The melt was cooled to form a pig which, in the case of raw material mixes including aluminum metal, consisted of two phases, on top was a spinel phase and at the bottom of the pig was a small amount of shot comprising ferrosilicon. The ferrosilicon phase consists of reduced oxide impurities. The average furnace run time was about twenty minutes.

Mixes 1 through 4 were introduced into the furnace as set forth in Table 1. Mix 4 is a control wherein no aluminum metal was present in the mix. Table 2. shows the analysis for each fused mix. Table 2. clearly shows a low iron content and a silica content in the range of 2-4 percent in the runs employing metallic aluminum in accordance with the present invention; whereas, the run using no aluminum shows unacceptable iron content.

**Table 1.**

| Weight percent | Mix 1 | Mix 2 | Mix 3 | Mix 4 |
|---|---|---|---|---|
| Guinea bauxite | 66.8 | 66.2 | 65.5 | 68.2 |
| Magnesite | 31.2 | 30.9 | 30.1 | 31.8 |
| Aluminum metal | 2.0 | 2.9 | 3.8 | 0 |

**Table 2.**

| Weight percent | Mix 1 | Mix 2 | Mix 3 | Mix 4 |
|---|---|---|---|---|
| Al₂O₃ | 65.32 | 65.08 | 67.26 | 62.67 |
| MgO | 30.15 | 31.45 | 28.87 | 30.56 |
| CaO | 0.29 | 0.28 | 0.30 | 0.28 |
| Fe₂O₃ | 0.37 | 0.11 | 0.21 | 2.56 |
| SiO₂ | 0.85 | 0.51 | 0.55 | 1.00 |
| TiO₂ | 2.95 | 2.51 | 2.73 | 2.86 |

### comparable - Example 2

Fusions were made in a 3.5 megawatt production furnace having a capacity of about 4536 kg (10,000 pounds). A first fusion was made using 62.8 percent Guinea bauxite, 35.2 percent magnesite and 2 percent aluminum metal. A second fusion was made using 44.3 percent Guinea bauxite, 14.8 percent Chinese bauxite, 38.7 percent magnesite and 2.2 percent aluminum metal. The results of the fusions are given in Table 3.

**Table 3**

| Weight percent | Fusion 1 | Fusion 2 |
|---|---|---|
| Al₂O₃ | 63.7 | 66.3 |
| MgO | 31.3 | 29.45 |
| Fe₂O₃ | 0.63 | 0.53 |
| TiO₂ | 2.76 | 2.17 |
| SiO₂ | 1.20 | 2.17 |
| CaO | 0.31 | 0.22 |

The Guinea type bauxite used in the forgoing examples has the following typical analysis: alumina 91.32 %, ferrous oxide 3.56%, titania 3.82%, calcium oxide 0.01 %, silica 1.26 %, and magnesia 0.03 %. The Chinese type bauxite has a typical analysis of alumina 89.1 %, ferrous oxide 1.32 %, titania 4.1 %, calcium oxide 0.18 %, and silica 5.3 %. The magnesite used in the examples has a typical analysis of magnesium oxide 98.37 %, silica 0.51%, alumina 0.12 %, ferrous oxide 0.24 % and calcium oxide 0.76 %. Unless otherwise indicated all parts and percentages are by weight.

## Claims

1. A spinel comprising from 20 to 40 weight percent magnesium expressed as MgO, from 55 to 77 weight percent aluminum expressed as Al₂O₃, from 2 to 4 weight percent titanium expressed as TiO₂, less than 1 weight percent silicon expressed as SiO₂, less than 0.5 weight percent iron expressed as Fe₂O₃, and less than 0.5 weight percent calcium expressed as CaO.

2. The spinel of claim 1 wherein the spinel contains from 63 to 69 weight percent aluminum expressed as Al₂O₃ and from 27 to 33 weight percent magnesium expressed as MgO.

3. A method for the preparation of an aluminum-magnesium spinel containing less than 0.5 weight percent iron expressed as Fe₂O₃ which comprises fusing bauxite and magnesite together characterized in that the fusion occurs in the presence of metallic aluminum and the spinel is separated from freed impurities.

4. The method of claim 3 characterized in that from 19 to 39 weight percent magnesite and from 56 to 76 weight percent bauxite and from about 1.5 to about 5 weight percent aluminum are used in the fusion.

5. The method of claim 4 characterized in that from 63 to 69 weight percent bauxite and from 27 to 33 weight percent magnesite and from about 2 to 4 weight percent metallic aluminum are used in the fusion.

## Patentansprüche

1. Spinell mit 20 bis 40 Gew.% Magnesium, ausgedrückt als MgO, 55 bis 77 Gew.% Aluminium, ausgedrückt als Al₂O₃, 2 bis 4 Gew.% Titan, ausgedrückt als TiO₂, weniger als 1 Gew.% Silicium, ausgedrückt als SiO₂, weniger als 0,5 Gew.% Eisen, ausgedrückt als Fe₂O₃, und weniger als 0,5 Gew.% Calcium, ausgedrückt als CaO.

2. Spinell nach Anspruch 1, wobei der Spinell 63 bis 69 Gew.% Aluminium, ausgedrückt als Al₂O₃, und 27 bis 33 Gew.% Magnesium, ausgedrückt als MgO, enthält.

3. Verfahren zur Herstellung eines Aluminium-Magnesium-Spinells, der weniger als 0,5 Gew.% Eisen, ausgedrückt als Fe₂O₃, enthält, unter gemeinsamem Schmelzen von Bauxit und Magnesit, **dadurch gekennzeichnet,** daß das Schmelzen in Gegenwart von metallischem Aluminium erfolgt und der Spinell von freigesetzten Verunreinigungen getrennt wird.

4. Verfahren nach Anspruch 3, **dadurch gekennzeichnet**, daß bei dem Schmelzen 19 bis 39 Gew.% Magnesit und 56 bis 76 Gew.% Bauxit sowie etwa 1,5 bis 5 Gew.% Aluminium verwendet werden.

5. Verfahren nach Anspruch 4, **dadurch gekennzeichnet**, daß bei dem Schmelzen 63 bis 69 Gew.% Bauxit und 27 bis 33 Gew.% Magnesit sowie etwa 2 bis 4 Gew.% metallisches Aluminium verwendet werden.

## Revendications

1. Spinelle comprenant de 20 à 40 % en poids de magnésium exprimé en MgO, de 55 à 77 % en poids d'aluminium exprimé en Al₂O₃, de 2 à 4 % en poids de titane exprimé en TiO₂, moins de 1% en poids de silicium exprimé en SiO₂, moins de 0,5 % en poids de fer exprimé en Fe₂O₃ et moins de 0,5 % en poids de calcium exprimé en CaO.

2. Spinelle selon la revendication 1, le spinelle contenant de 63 à 69 % en poids d'aluminium exprimé en Al₂O₃ et de 27 à 33 % en poids de magnésium exprimé en MgO.

3. Procédé pour la préparation d'un spinelle d'aluminium-magnésium contenant moins de 0,5 % en poids de fer exprimé en Fe₂O₃, qui comprend les étapes consistant à faire fondre de la bauxite et de la magnésite ensemble, caractérisé en ce que la fusion est effectuée en présence d'aluminium métallique et le spinelle est séparé des impuretés libérées.

4. Procédé selon la revendication 3, caractérisé en ce que de 19 à 39 % en poids de magnésite et de 56 à 76 % en poids de bauxite et d'environ 1,5 à environ 5 % en poids d'aluminium sont utilisés dans la fusion.

5. Procédé selon la revendication 4, caractérisé en ce que de 63 à 69 % en poids de bauxite et de 27 à 33 % en poids de magnésite et d'environ 2 à 4 % en poids d'aluminium métallique sont utilisés dans la fusion.
